(19) Europäisches Patentamt / European Patent Office / Office européen des brevets

(11) **EP 1 687 161 B1**

(12) **FASCICULE DE BREVET EUROPEEN**

(45) Date de publication et mention de la délivrance du brevet:
**04.04.2007 Bulletin 2007/14**

(21) Numéro de dépôt: **04798896.9**

(22) Date de dépôt: **17.11.2004**

(51) Int Cl.:
*B60H 1/00* (2006.01)

(86) Numéro de dépôt international:
**PCT/IB2004/003769**

(87) Numéro de publication internationale:
**WO 2005/051691 (09.06.2005 Gazette 2005/23)**

(54) **INSTALATION DE CLIMATISATION DE VEHICULE**

FAHRZEUGKLIMAANLAGENANORDNUNG

VEHICLE AIR-CONDITIONING ASSEMBLY

(84) Etats contractants désignés:
**AT BE BG CH CY CZ DE DK EE ES FI FR GB GR HU IE IS IT LI LU MC NL PL PT RO SE SI SK TR**

(30) Priorité: **25.11.2003 FR 0313823**

(43) Date de publication de la demande:
**09.08.2006 Bulletin 2006/32**

(73) Titulaire: **VALEO SYSTEMES THERMIQUES**
**78320 Le Mesnil St. Denis (FR)**

(72) Inventeurs:
• **LIU, jin Ming**
**F-78700 Conflans St. Honorine (FR)**
• **BEN YAHIA, Mohamed**
**F-75005 Paris (FR)**
• **MEURILLON, Paul**
**F-95240 Cormeilles en Parisis (FR)**

(74) Mandataire: **Léveillé, Christophe**
**Valeo Systemes Thermiques**
**8, rue Louis Lormand**
**La Verrière BP 513**
**78321 Le Mesnil-Saint- Denis Cedex (FR)**

(56) Documents cités:
**FR-A- 2 833 886**          **US-A- 5 655 378**
**US-A1- 2002 023 451**      **US-A1- 2003 115 896**
**US-B1- 6 298 674**

Printed by Jouve, 75001 PARIS (FR)

**Description**

L'invention concerne les circuits de climatisation des véhicules à moteur.

Dans les véhicules à moteur classiques, le compresseur du circuit de climatisation est entraîné par le moteur et consomme donc une partie de la puissance du moteur. La puissance absorbée par le compresseur, quand il est en marche, diminue le rendement du moteur, et par suite, augmente la consommation de carburant et la pollution générée par les gaz d'échappement du véhicule. Cet inconvénient est gênant pour les compresseurs mécaniques à contrôle externe, dont l'utilisation se généralise.

Par ailleurs, dans des réalisations existantes, le calculateur d'injection du véhicule ne dispose pas de la valeur instantanée de la puissance réellement absorbée par le compresseur et choisit donc, pour le fonctionnement du compresseur, des paramètres d'injection par défaut correspondant à la valeur maximale de la puissance absorbée, valeur qui est rarement atteinte en pratique.

Par conséquent, une solution pour optimiser le rendement du moteur consiste à estimer la valeur instantanée de cette puissance réellement absorbée par le compresseur. La connaissance de cette information peut alors permettre d'adapter les paramètres d'injection du moteur aux besoins réels.

Dans des réalisations existantes, on utilise une estimation du débit massique de fluide frigorigène pour calculer la puissance instantanée absorbée par le compresseur.

De telles réalisations concernent généralement les fluides frigorigènes sous-critiques et sont mal adaptées aux fluides frigorigènes supercritiques.

L'utilisation de fluides frigorigènes supercritiques, notamment du fluide frigorigène $CO_2$ (R744), s'est développée dans les circuits de climatisation des véhicules pour limiter les effets néfastes des fluides frigorigènes sur l'environnement. Le fluide frigorigène $CO_2$ possède en effet un potentiel de réchauffement de la planète nettement inférieur à celui des fluides frigorigènes sous-critiques tels que les fluides HFC du type R134a.

Un circuit de climatisation utilisant un fluide supercritique comporte un compresseur, un refroidisseur de gaz, un échangeur thermique interne, un organe de détente et un évaporateur parcourus, dans cet ordre, par le fluide frigorigène. Dans un tel circuit, le refroidissement du fluide après compression n'entraîne pas de changement de phase. Le fluide ne passe à l'état liquide qu'au cours de la détente. Cette propriété des fluides super-critiques ne permet pas d'utiliser l'installation de la demande de brevet n° 01 16568, correspondant au brevet FR 2 833 886 publié le 27 juin 2003, pour estimer le débit de fluide supercritique et la puissance consommée par le compresseur.

US 2003/0115896 A1 propose une installation de climatisation pour estimer le débit massique d'un fluide frigorigène supercritique, à partir d'une mesure de la haute pression et d'une mesure de la basse pression. Toutefois, pour que l'estimation du débit ait une précision satisfaisante, il est nécessaire que le circuit de climatisation soit contrôlé de sorte que le fluide en sortie de l'organe de détente soit presque entièrement à l'état liquide. Par ailleurs, un capteur est requis pour mesurer la basse pression, ce qui augmente le coût de l'installation de climatisation.

La demande de brevet français N° 0303362, correspondant au brevet FR 2852558 publié le 24 septembre 2004, propose également une installation de climatisation pour estimer le débit massique d'un fluide frigorigène supercritique. Pour cela, l'installation de climatisation proposée comprend une fonction de calcul utilisant deux écarts de températures relatives au refroidisseur de gaz, dont l'un au moins est fondé sur la température du fluide frigorigène en un point intermédiaire choisi du refroidisseur de gaz. Ce point intermédiaire est en particulier situé à une distance de l'entrée $x_i$ du refroidisseur de gaz, comprise entre 5 % et 35% de la longueur totale du refroidisseur de gaz. Toutefois, cette installation nécessite un nombre important de capteurs (capteurs pour mesurer la pression du fluide en entrée et en sortie du compresseur, la température du fluide frigorigène à l'entrée du refroidisseur de gaz, la température du flux d'air reçu par le refroidisseur de gaz et la température du fluide frigorigène au point intermédiaire choisi du refroidisseur de gaz), ce qui augmente donc le coût de l'installation.

La présente invention a pour objet une installation de climatisation qui remédie à ces inconvénients connus de l'art antérieur.

A cet effet, l'invention propose une installation de climatisation pour véhicule à moteur, munie d'un circuit de fluide frigorigène supercritique comprenant un compresseur, un refroidisseur de gaz, un organe de détente définissant une section de passage de fluide, et un évaporateur. L'installation comprend en outre un dispositif électronique de contrôle destiné à interagir avec le circuit de fluide frigorigène. Avantageusement, le dispositif électronique de contrôle comprend une fonction de calcul utilisant une estimation de la section de passage de l'organe de détente, le coefficient de densité du fluide frigorigène, et la pression du fluide frigorigène à l'entrée de l'organe de détente pour calculer une estimation du débit massique de fluide frigorigène au niveau de l'organe de détente.

Selon un aspect de l'invention, la section de passage de l'organe de détente est estimée à partir de la pression du fluide frigorigène à l'entrée de l'organe de détente.

En particulier, le dispositif électronique de contrôle peut être apte à réagir au fait que la valeur de la pression du fluide frigorigène en entrée de l'organe de détente $P_{20}$ est:

- inférieure ou égale à une première valeur de pression P1, en affectant une première constante S1 à la section de passage de l'organe de détente;
- inférieure ou égale à une deuxième valeur de pression P2 et supérieure à la première valeur de pression P1, en mettant en oeuvre la résolution de l'équation suivante pour calculer une estimation de la section de passage de l'organe de détente S:

$$S = S1 + (S2 - S1)^* (P_{20} - P1) / (P2 - P1),$$

où S2 est une deuxième constante;
- inférieure ou égale à une troisième valeur de pression P3 et supérieure à la deuxième valeur de pression P2, en mettant en oeuvre la résolution de l'équation suivante pour calculer une estimation de la section de passage de l'organe de détente S:

$$S = S2 + (S3 - S2)^* (P_{20} - P2) / (P3 - P2)$$

où S3 est une troisième constante;
- supérieure ou égale à la troisième valeur de pression P3 en affectant une quatrième constante S4 à la section de passage de l'organe de détente.

Dans une forme de réalisation particulière, la première valeur de pression P1 est sensiblement égale à 80 bars, la deuxième valeur de pression P2 est sensiblement égale à 110 bars, la troisième valeur de pression P3 est sensiblement égale à 135 bars, tandis que la première constante S1 est sensiblement égale à $0,07 mm^2$, la deuxième constante S2 est sensiblement égale à $0,5 mm^2$, la troisième constante S3 est sensiblement égale à $0,78 mm^2$, et la quatrième constante S4 est sensiblement égale à $3,14 mm^2$.

Selon un autre aspect de l'invention, la fonction de calcul est propre à calculer le coefficient de densité du fluide frigorigène à partir de la température du fluide à l'entrée de l'organe de détente et de la pression du fluide à l'entrée de l'organe de détente.

L'installation de climatisation peut comporter une sonde placée à l'entrée de l'organe de détente pour mesurer la température du fluide à l'entrée de l'organe de détente.

L'installation de climatisation peut également comporter un capteur placé à l'entrée de l'organe de détente pour mesurer la pression du fluide à l'entrée de l'organe de détente.

En complément, le dispositif électronique de contrôle peut comporter une fonction d'estimation de puissance capable d'estimer la puissance absorbée par le compresseur à partir:

- du débit de fluide frigorigène fourni par la fonction de calcul,
- du travail du compresseur, et
- de la vitesse de rotation du compresseur.

Le dispositif électronique de contrôle est apte à estimer le travail du compresseur à partir de la pression du fluide à l'entrée de l'organe de détente, de la pression du fluide frigorigène en entrée du compresseur et d'une température de fluide relative au compresseur.

Avantageusement, la pression du fluide frigorigène en entrée du compresseur est estimée à partir d'une pression à l'entrée ou à la sortie de l'évaporateur combinée au débit massique de fluide frigorigène.

En outre, la pression à l'entrée ou à la sortie de l'évaporateur est déterminée à partir de la température du fluide réfrigérant, cette dernière étant soit mesurée par une sonde soit estimé à partir :

- d'une température relative à l'évaporateur,
- de l'efficacité de l'évaporateur,
- de la température de l'air à refroidir.

La température de fluide relative au compresseur peut être la température du fluide à l'entrée du compresseur.

L'installation de climatisation peut alors comporter une sonde placée à l'entrée du compresseur pour mesurer la température du fluide à l'entrée du compresseur.

En variante, la température de fluide relative au compresseur peut être la température du fluide à la sortie du compresseur.

L'installation de climatisation peut alors comporter une sonde placée à la sortie du compresseur pour mesurer la température du fluide à la sortie du compresseur.

L'invention couvre également un programme-produit, qui peut être défini comme comprenant les fonctions mises en oeuvre pour estimer le débit de fluide frigorigène et la puissance consommée par le compresseur.

D'autres caractéristiques et avantages de l'invention apparaîtront à l'examen de la description détaillée ci-après, et des dessins annexés sur lesquels:

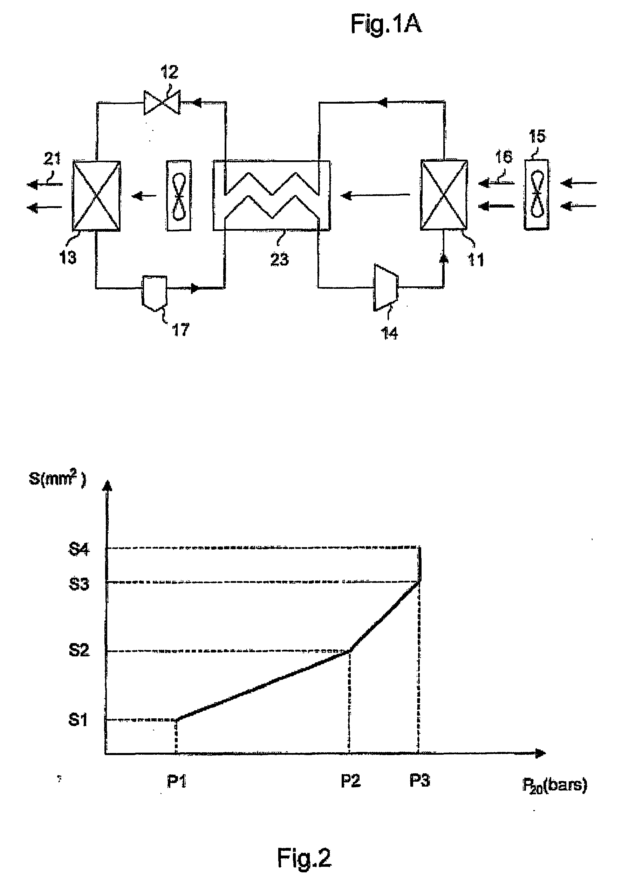

, la figure 1A est un schéma d'un circuit de climatisation de véhicule automobile à moteur, fonctionnant avec un fluide supercritique,

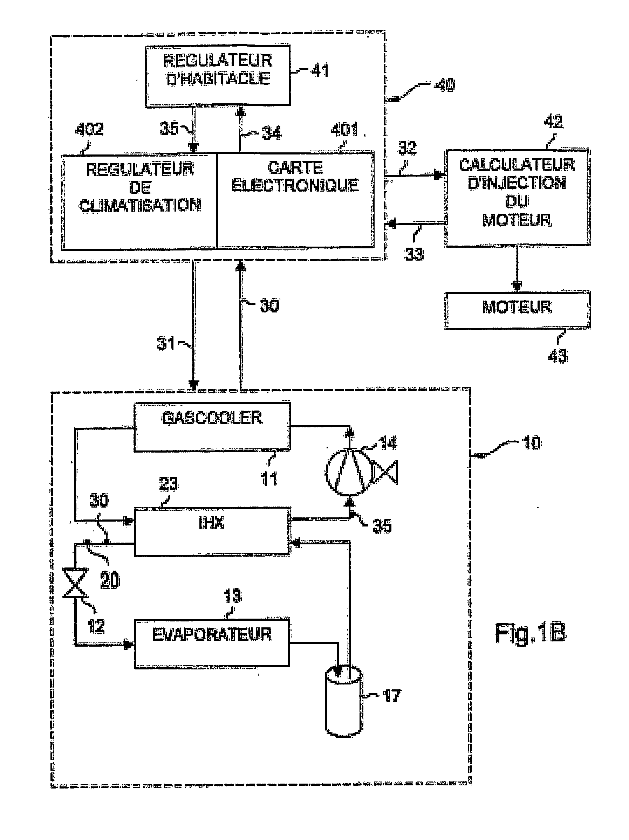

, la figure 1B est un schéma d'une installation de climatisation conforme à l'invention,

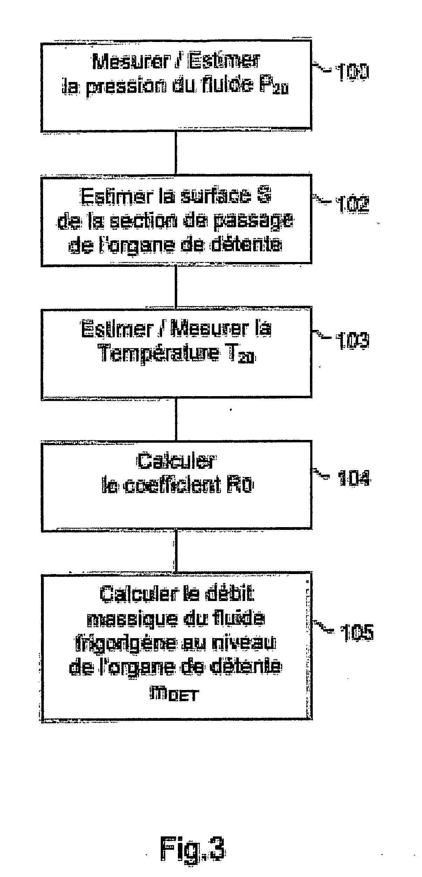

, la figure 2 est un diagramme représentant les variations de la section de passage de l'organe de détente en fonction de la pression du fluide à l'entrée de l'organe de détente;

, la figure 3 est un organigramme représentant les étapes mises en oeuvre par le dispositif de contrôle pour estimer le débit massique de fluide frigorigène au niveau du détendeur;

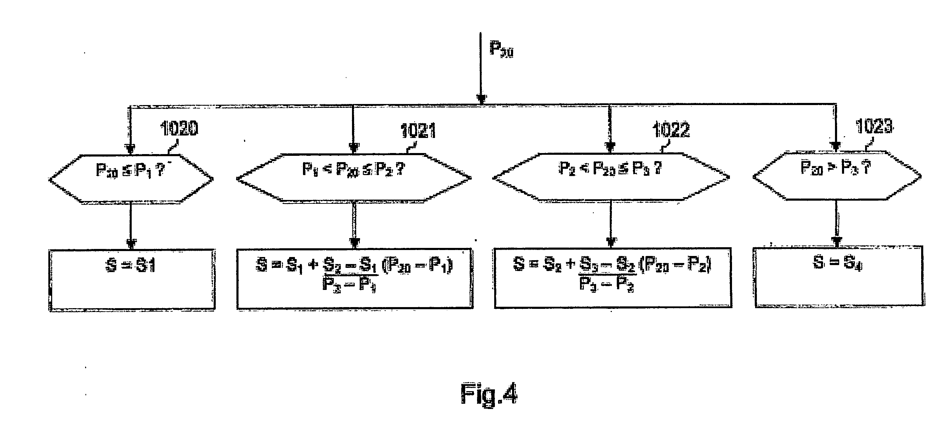

, la figure 4 est un organigramme représentant les étapes mises en oeuvre par le dispositif de contrôle pour estimer la surface de la section de passage de l'organe de détente;

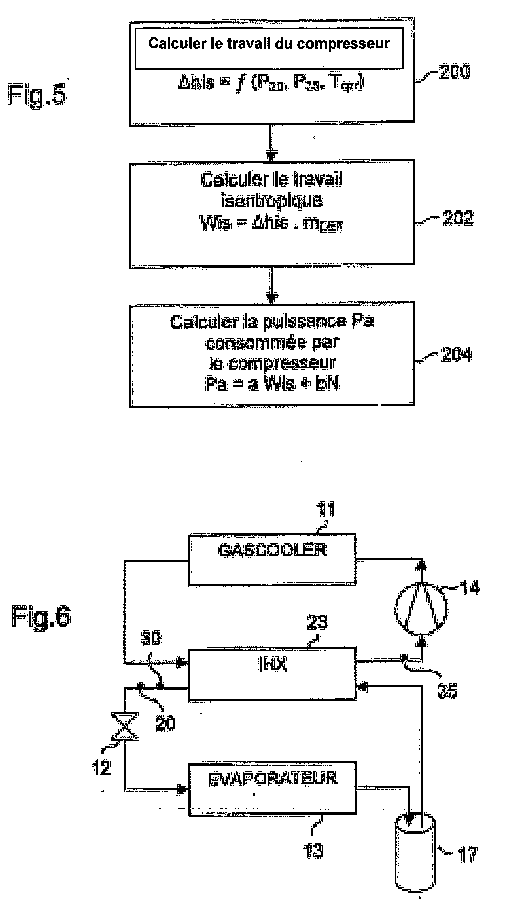

, la figure 5 est un organigramme représentant les étapes mises en oeuvre par le dispositif de contrôle pour estimer la puissance consommée par le compresseur, conformément à l'invention,

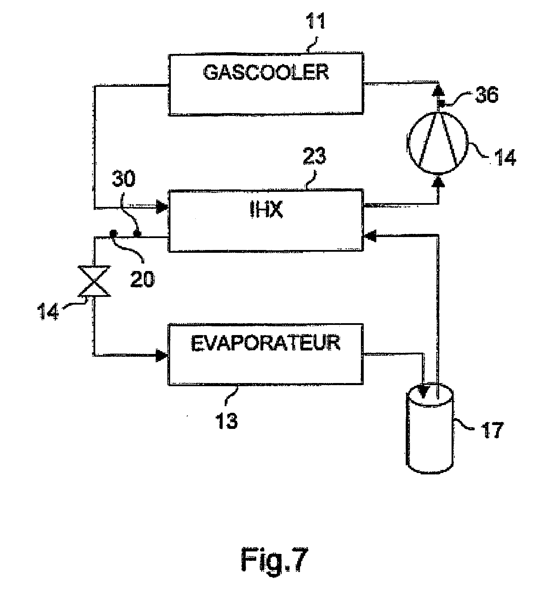

, les figures 6 et 7 sont des schémas du circuit de climatisation, selon des variantes de réalisation de l'invention,

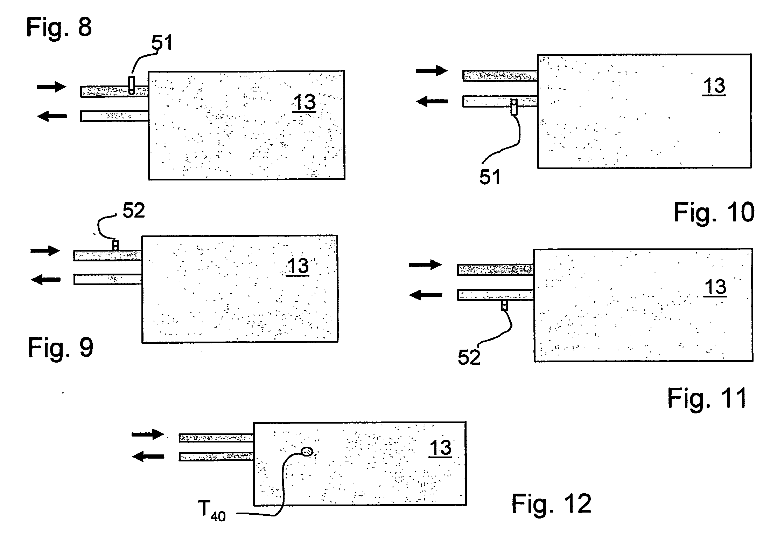

, les figures 8 à 12 sont des représentations schématiques du positionnement des sondes de températures servant à déterminer la pression à l'entrée ou à la sortie de l'évaporateur,

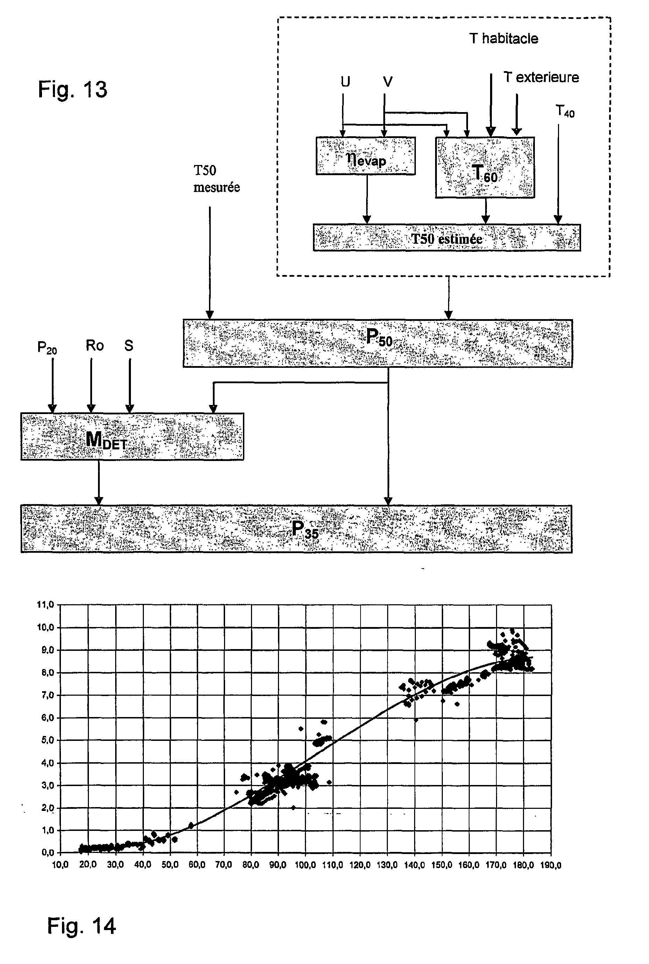

, la figure 13 illustre la méthode de détermination de la pression du fluide frigorigène à l'entrée du compresseur, et

, la figure 14 montre la relation entre le débit massique du fluide réfrigérant et la pression du fluide frigorigène en entrée du compresseur.

L'annexe A comporte des équations mathématiques principales utilisées pour mettre en oeuvre l'installation.

Les dessins contiennent, pour l'essentiel, des éléments de caractère certain. Ils pourront donc non seulement servir à mieux faire comprendre la description, mais aussi contribuer à la définition de l'invention, le cas échéant.

La figure 1A représente un circuit de climatisation parcouru par un fluide frigorigène supercritique. Par la suite, la description sera faite en référence au fluide frigorigène supercritique $CO_2$, à titre d'exemple non limitatif.

Un tel circuit comporte classiquement:

, un compresseur 14 propre à recevoir le fluide à l'état gazeux et à le comprimer,

, un refroidisseur de gaz 11 ("gas cooler") propre à refroidir le gaz comprimé par le compresseur,

, un organe de détente 12 propre à abaisser la pression du fluide, et

, un évaporateur 13 propre à faire passer le fluide provenant de l'organe de détente de l'état liquide à l'état gazeux pour produire un flux d'air climatisé 21 qui est envoyé vers l'habitacle du véhicule.

Le circuit peut comporter en outre un échangeur thermique interne 23, permettant au fluide circulant du refroidisseur de gaz vers l'organe de détente de céder de la chaleur au fluide circulant de l'évaporateur vers le compresseur. Le circuit peut en outre comporter un accumulateur 17 placé entre la sortie de l'évaporateur et l'entrée du compresseur pour éviter les coups de liquide.

Le refroidisseur de gaz 11 reçoit un flux d'air extérieur 16 pour évacuer la chaleur prélevée dans l'habitacle, qui dans certaines conditions de fonctionnement est mis en mouvement par un groupe moto-ventilateur 15.

L'évaporateur 13 reçoit un flux d'air d'un pulseur pour produire un flux d'air climatisé 21.

L'organe de détente 12 peut avoir une section de passage de surface variable, tel qu'un détendeur électronique, un détendeur thermostatique, ou tout autre détendeur pour lequel la surface de la section de passage est une fonction de la haute pression. L'organe de détente 12 peut également avoir une section de passage de surface fixe, tel qu'un orifice calibré.

Le fluide frigorigène supercritique est comprimé en phase gazeuse et amené à une pression élevée par le compresseur 14. Le refroidisseur de gaz 11 refroidit ensuite le fluide frigorigène grâce au flux d'air entrant 16. A la différence des circuits de climatisation fonctionnant avec un fluide sous-critique, le refroidissement du fluide après compression n'entraîne pas de changement de phase. Le fluide ne passe à l'état diphasique, avec un titre vapeur fonction de la basse pression, qu'au cours de la détente. L'échangeur thermique interne 23 permet de refroidir très fortement le fluide.

On se réfère maintenant à la figure 1B qui représente une installation de climatisation conforme à l'invention, mise en place dans un véhicule automobile.

Le véhicule automobile est animé par un moteur 43, qui peut être commandé par un calculateur d'injection 42.

Le calculateur d'injection 42 reçoit des informations de divers capteurs qu'il interprète pour ajuster les paramètres d'injection.

Le calculateur d'injection 42 peut en outre fournir des informations sur les conditions intérieures ou extérieures du véhicule (informations fournies par un capteur solaire, nombre d'occupants, etc.). En particulier, il peut fournir des informations sur des valeurs instantanées relatives au fonctionnement du véhicule, et notamment sur la vitesse de rotation du compresseur N.

L'installation est en outre munie d'un calculateur de climatisation 40, comprenant un régulateur d'habitacle 41 et un régulateur de boucle de climatisation 402. Le régulateur d'habitacle 41 est destiné à fixer la consigne de température de l'air extérieur soufflé à l'entrée de l'évaporateur 13.

Le calculateur d'injection du moteur peut agir sur l'appareil de climatisation grâce à un régulateur de climatisation 402. Cette liaison peut interdire la mise en marche de l'appareil de la climatisation lorsque le moteur est fortement sollicité.

L'installation de climatisation conforme à l'invention se fonde sur une modélisation de l'organe de détente pour fournir une estimation du débit massique de fluide frigorigène au niveau du détendeur $m_{DET}$.

L'installation de climatisation comprend un dispositif électronique de contrôle, par exemple une carte électronique 401, destinée à interagir avec le circuit de climatisation 10, via les liaisons 30/31, et le calculateur d'injection 42, via les liaisons 32/33.

La carte électronique 401 peut-être considérée comme partie intégrante du calculateur de climatisation 40 du véhicule.

La carte électronique 401 peut récupérer des informations 30 provenant de capteurs mis en place sur le circuit de climatisation 10. Elle peut recevoir également des informations du calculateur d'injection du moteur 42 par la liaison 33, en particulier la vitesse de rotation du compresseur N, et/ou la vitesse d'avancement V du véhicule.

La Demanderesse a trouvé que l'organe de détente peut être modélisé par l'équation A10 de l'annexe A, où K est un coefficient caractérisant l'organe de détente, en particulier sa perte de pression.

D'après cette modélisation, la fonction de calcul peut calculer une estimation du débit massique de fluide frigorigène au niveau de l'organe de détente $m_{DET}$ à partir :

, de la pression du fluide à l'entrée de l'organe de détente $P_{20}$,
, du coefficient Ro de la densité du fluide frigorigène $CO_2$, et
, de la surface S (en mm2) de la section de passage de l'organe de détente.

La Demanderesse a également trouvé que le coefficient Ro de la densité du fluide frigorigène $CO_2$ peut être estimé à partir de la température en entrée de l'organe de détente $T_{30}$ et de la pression $P_{20}$ en entrée de l'organe de détente, conformément à l'équation A11 de l'annexe A.

La Demanderesse a trouvé en outre que la surface S (en $mm^2$) de la section de passage d'un organe de détente à section de passage variable dépend de la valeur de la pression du fluide à l'entrée de l'organe de détente $P_{20}$.

Ainsi, une estimation du débit massique de fluide frigorigène au niveau de l'organe de détente $m_{DET}$ peut être obtenue à partir de la pression du fluide à l'entrée de l'organe de détente $P_{20}$, et de la température en entrée de l'organe de détente $T_{30}$.

La pression du fluide frigorigène en entrée de l'organe de détente $P_{20}$ et la température du fluide frigorigène $T_{30}$ à l'entrée de l'organe de détente peuvent être estimées ou mesurées.

Le circuit de climatisation peut comporter deux capteurs distincts pour mesurer respectivement la pression du fluide frigorigène en entrée de l'organe de détente $P_{20}$ et la température du fluide frigorigène $T_{30}$ à l'entrée de l'organe de détente. En variante, le circuit de climatisation peut comporter un seul capteur placé à l'entrée de l'organe de détente pour mesurer ces deux grandeurs.

La figure 2 est un diagramme montrant l'évolution de la surface S (en $mm^2$) de la section de passage en fonction de la pression du fluide à l'entrée de l'organe de détente $P_{20}$ (en bars). Les courbes représentées sur ce diagramme correspondent aux équations A2 à A5 de l'annexe A.

Tant que la pression du fluide $P_{20}$ à l'entrée de l'organe de détente est inférieure ou égale à une première valeur de pression P1, la surface S est égale à une première constante S1, conformément à l'équation A2 de l'annexe A.

Lorsque la pression $P_{20}$ est supérieure à la première valeur de pression P1 et inférieure ou égale à une deuxième valeur de pression P2, la surface S évolue selon une droite, dont le coefficient directeur est lié aux valeurs S1, P1, P2 et à une deuxième constante S2, conformément à l'équation A3 de l'annexe A. La valeur S2 correspond à la valeur de la surface S lorsque $P_{20}$ est égale à la valeur P2.

Lorsque la pression $P_{20}$ est supérieure à la deuxième valeur de pression P2 et inférieure ou égale à une troisième valeur de pression P3, la surface S évolue selon une droite, dont le coefficient directeur est lié aux valeurs S2, P2, P3 et à une troisième constante S3, conformément à l'équation A4 de l'annexe A.

Lorsque la pression $P_{20}$ est supérieure ou égale à la troisième valeur de pression P3, la surface S est égale à une quatrième constante S4 supérieure à la troisième constante S3, conformément à l'équation A5 de l'annexe A.

En particulier, la première valeur de pression P1 peut être sensiblement égale à 80 bars, la deuxième valeur de pression P2 peut être sensiblement égale à 110 bars, la troisième valeur de pression P3 peut être sensiblement égale à 135 bars, la première constante S1 peut être sensiblement égale à 0,07 mm$^2$, la deuxième constante S2 peut être sensiblement égale à 0,50 mm$^2$, la troisième constante S3 peut être sensiblement égale à 0,78 mm$^2$, et la quatrième constante S4 peut être sensiblement égale à 3,14 mm$^2$.

En complément, l'estimation du débit massique de fluide frigorigène, fournie par la fonction de calcul de la carte électronique, peut être utilisée pour calculer la puissance mécanique absorbée. Pour cela, la carte électronique comprend une fonction d'estimation de puissance capable d'estimer la puissance absorbée par le compresseur Pa à partir du débit massique de fluide frigorigène $m_{DET}$. En particulier, la fonction d'estimation de puissance est capable d'estimer la puissance absorbée par le compresseur Pa à partir du travail de compression isentropique Wis, et de la vitesse de rotation du compresseur N, conformément à l'équation A6 de l'annexe A. Les coefficients a et b sont liés à des paramètres de fonctionnement du circuit de climatisation. Le coefficient a correspond au rendement mécanique par rapport à la compression isentropique du compresseur et est de l'ordre de 1,38. Le coefficient b est l'image de l'efficacité du compresseur et correspond au facteur de frottement du compresseur.

Conformément à l'équation A7 de l'annexe A, la puissance de compression isentropique Wis est liée :

, au débit massique de fluide frigorigène $m_{DET}$, dont une estimation est calculée par la fonction de calcul comme décrit ci-dessus, et

, travail isentropique du compresseur $\Delta$his.

La Demanderesse a trouvé que l'estimation du travail du compresseur $\Delta$his peut être obtenue, conformément à l'équation A80 de l'annexe A, à partir :

, de la pression du fluide frigorigène en entrée de l'organe de détente $P_{20}$,

, de la pression du fluide frigorigène en entrée du compresseur $P_{35}$,

, d'une température du fluide frigorigène relative au compresseur $T_{cpr}$.

La pression du fluide frigorigène en entrée du compresseur $P_{35}$ et la température du fluide relative au compresseur $T_{cpr}$ peuvent être estimées ou mesurées.

L'estimation de la pression du fluide frigorigène à l'entrée du compresseur est faite à l'aide du débit massique de fluide frigorigène $m_{DET}$ calculé ci-dessus et de la perte de charge $\Delta$p entre l'entrée de l'évaporateur 13 et l'entrée du compresseur 14.

En variante, cette estimation de la pression du fluide frigorigène à l'entrée du compresseur peut être est déterminée à l'aide du débit massique de fluide frigorigène $m_{DET}$ calculé ci-dessus et de la perte de charge $\Delta$p entre la sortie de l'évaporateur 13 et l'entrée du compresseur 14.

L'exemple ci-dessous est décrit en rapport avec la pression en entrée de l'évaporateur 13 mais cet exemple est transposable de manière similaire en utilisant la pression en sortie de l'évaporateur 13.

Cette perte de charge $\Delta$p est calculé à partir de la formule A90 de l'annexe A dans laquelle :

- $P_{50}$ est une estimation de la pression à l'entrée de l'évaporateur,
- $P_{35}$ est l'estimation de la pression du fluide frigorigène à l'entrée du compresseur.

On sait aussi que cette perte de charge $\triangle$p peut être déterminée à l'aide de la formule A100 où :

- K est un coefficient de perte de charge,
- Ro est la densité du fluide réfrigérant, et
- $VCo_2$ est la vitesse du fluide réfrigérant.

Conformément à l'équation A101 de l'annexe A, la vitesse du fluide réfrigérant $VCo_2$ est déterminable à partir :

- du débit massique de fluide frigorigène $m_{DET}$, déterminé au moyen de l'équation A10,
- de la densité du fluide réfrigérant Ro, et
- d'une constante S correspondant à la section et longueur de passage moyens, regroupant à la fois la perte de charge linéaire et singulière, que parcourt le fluide frigorigène. En confrontant les deux équations A90 et A100, on est en mesure d'estimer la pression du fluide frigorigène à l'entrée du compresseur telle qu'illustrée par l'équation A9.

Ainsi, la seule inconnue de cette équation est l'estimation de la pression à l'entrée de l'évaporateur $P_{50}$.

Il est connu de la loi de saturation des fluides, autrement appelé équation d'état du fluide, que la pression $P_{50}$

à l'entrée de l'évaporateur est directement dépendante de la température de saturation $T_{50}$ à l'entrée de l'évaporateur. Dans la plage de fonctionnent qui nous intéresse, cette équation peut être représentée sous la forme d'un polynôme de deuxième degré.

Cette température de saturation du fluide réfrigérant pression $T_{50}$ peut être mesurée ou estimée.

Lorsque celle-ci est estimée, on utilise l'équation A91 de l'annexe A dans laquelle :

- $T_{40}$ est une information relative à la température évaporateur disponible sur de nombreuses installations de climatisation. Il s'agit d'une sonde CTN ou CTP disposé sur l'évaporateur dont l'objectif principale dans l'art antérieur est de d'empêcher le givrage de l'évaporateur par arrêt du compresseur. Cette Température $T_{40}$ correspond à une température de surface de l'une des parois de l'évaporateur 13 (par exemple au creux des intercalaires comme illustré à la figure 12) ou à une température de l'air à la sortie de l'évaporateur.
- $\eta_{evap}$ est une image de l'efficacité de l'évaporateur, qui peut aisément être ramenée à une fonction de la tension U du pulseur d'air de l'évaporateur dans l'habitacle et de la vitesse d'avancement V du véhicule tel qu'exprimée dans l'équation A910 de l'annexe A,
- $T_{60}$ est la température de l'air à refroidir par l'installation de climatisation. Cette température est estimée en fonction de la température à l'intérieur de l'habitacle, de la température extérieure de l'habitacle, de la tension U du pulseur, de la position du volet de recyclage de l'installation de climatisation et de la vitesse d'avancement V du véhicule. Cette fonction est exprimée dans l'équation A920 de l'annexe A.

Les figures 8 et 9 illustrent la possibilité de mesurer la température de saturation $T_{50}$ du fluide frigorigène à l'entrée de l'évaporateur 13, soit au moyen d'une sonde de température intrusive ou directe 51, c'est-à-dire baignant directement dans le fluide réfrigérant (Fig 7), soit au moyen d'une sonde non-intrusive 52 ou indirecte qui mesure la température du fluide réfrigérant à partir de la température du tube qui le transporte (Fig 8).

Les figures 10 et 11 montrent la possibilité de mesurer la température de saturation $T_{50}$ du fluide frigorigène à la sortie de l'évaporateur 13 en utilisant des moyens identiques à la mesure de température envisagée à l'entrée de l'évaporateur 13.

Cette méthode de détermination de la pression du fluide frigorigène à l'entrée du compresseur est résumée à la figure 13 sous la forme d'un synoptique dans lequel :

- si la température $T_{50}$ à l'entrée ou à la sortie de l'évaporateur est estimée, on utilise :

    o l'efficacité de l'évaporateur $\eta_{evap}$ déterminée à l'aide des informations disponibles sur le véhicule telles que la tension U du pulseur et la vitesse d'avancement V du véhicule,
    o ces deux informations sont utilisés aussi pour déterminer la température $T_{60}$ de l'air à refroidir combinée à la température à l'intérieur de l'habitacle et à la température extérieure,
    o l'efficacité de l'évaporateur $\eta_{evap}$, la température $T_{60}$ de l'air à refroidir et la température en surface de l'évaporateur $T_{40}$ sont combinées pour estimer la température $T_{50}$ à l'entrée de l'évaporateur 13,

- Si la température $T_{50}$ est mesurée, une sonde de température 51 ou 52 délivre la valeur attendue,
- La température $T_{50}$ estimée ou mesurée est utilisée pour déterminer la pression $P_{50}$ selon la loi de saturation du fluide réfrigérant,
- Cette pression $P_{50}$ à l'entrée ou à la sortie de l'évaporateur 13 combinée de la pression du fluide à l'entrée de l'organe de détente $P_{20}$, au coefficient Ro de la densité du fluide frigorigène $CO_2$, et à la surface S (en mm2) de la section de passage de l'organe de détente permet de déterminer le débit massique du fluide réfrigérant,
- enfin, la combinaison de cette information de débit massique avec l'estimation la pression à l'entrée de l'évaporateur $P_{50}$ permet de déterminer la pression du fluide frigorigène en entrée du compresseur $P_{35}$ sans utiliser de capteur spécifique et ainsi sans augmenter le coût de l'installation de climatisation.

La figure 14 illustre la relation entre le débit massique du fluide réfrigérant et la pression du fluide frigorigène en entrée du compresseur $P_{35}$. L'abscisse de cette courbe représente le débit massique $M_{DET}$ en kilogramme par heure et l'ordonnée de cette courbe illustre la perte de charge $\Delta p$ en bars entre l'entrée ou la sortie de l'évaporateur 13 et l'entrée du compresseur 14. On constate qu'une erreur d'estimation du débit massique de l'ordre de 30kg entraîne une erreur de détermination de $P_{35}$ de l'ordre de deux bars. Cette erreur est mineure au regard des valeurs de pressions absolues de fonctionnement qui sont souvent supérieures à 35bars.

La température du fluide relative au compresseur peut être la température du fluide à l'entrée du compresseur $T_{35}$, conformément à l'équation A81 de l'annexe A. R est la constante des gaz parfaits et M correspond à la masse molaire du fluide. Le rapport R/M peut être notamment égal à 188,7.

En variante, la température du fluide relative au compresseur peut être la température du fluide à la sortie du

compresseur $T_{36}$, conformément à l'équation A82 de l'annexe A.

La figure 3 est un organigramme qui représente les étapes mises en oeuvre par la carte électronique pour estimer le débit massique de fluide frigorigène $m_{DET}$ et la puissance consommée par le compresseur.

A l'étape 100, la pression du fluide à l'entrée de l'organe de détente $P_{20}$ est estimée/mesurée. En référence aux figures 1B, 6 et 7, la pression du fluide à l'entrée de l'organe de détente $P_{20}$ peut être mesurée par un capteur 20 placée à l'entrée de l'organe de détente. En variante, la pression du fluide à l'entrée de l'organe de détente $P_{20}$ peut être estimée.

A l'étape 102, la carte électronique 401 estime la surface S de la section de passage de l'organe de détente 12 à partir de la valeur mesurée/estimée de la pression du fluide à l'entrée de l'organe de détente $P_{20}$, conformément aux équations A4 et A5 de l'annexe A.

L'étape 102 est détaillée sur l'organigramme de la figure 4. La carte électronique détermine si la valeur mesurée de la pression du fluide à l'entrée de l'organe de détente $P_{20}$ est :

- inférieure ou égale à la première valeur de pression P1 (étape 1020), auquel cas la surface de la section de passage de l'organe de détente vaut S1;
- supérieure à la première constante P1 et inférieure ou égale à la deuxième valeur de pression P2 (étape 1021), auquel cas la surface de la section de passage de l'organe de détente est donnée par l'équation A3 de l'annexe A en fonction de la valeur de la pression $P_{20}$ obtenue à l'étape 100;
- supérieure à la deuxième valeur de pression P2 et inférieure ou égale à la troisième valeur de pression P3 (étape 1022), auquel cas la surface de la section de passage de l'organe de détente est donnée par l'équation A4 de l'annexe A en fonction de la valeur de la pression $P_{20}$ obtenue à l'étape 100; et
- supérieure ou égale à la troisième valeur de pression P3 (étape 1023), auquel cas la surface de la section de passage de l'organe de détente vaut S4.

A l'étape 103, la carte électronique fournit une estimation/mesure de la température $T_{30}$ à l'entrée de l'organe de détente. L'installation peut comporter un capteur de température 30 pour mesurer la température du fluide $T_{30}$ à l'entrée de l'organe de détente, comme représenté sur les figures 1B, 6 et 7. En variante, l'installation peut comporter un seul capteur 20 pour mesurer à la fois la pression $P_{20}$ et la température du fluide $T_{30}$ à l'entrée de l'organe de détente. La température du fluide $T_{30}$ à l'entrée de l'organe de détente peut également être estimée.

A l'étape 104, la carte électronique 401 estime le coefficient Ro de la densité du fluide frigorigène $CO_2$. Le coefficient Ro de la densité du fluide frigorigène $CO_2$ peut être calculé selon l'équation A11 de l'annexe A à partir de la valeur de la pression du fluide à l'entrée de l'organe de détente $P_{20}$, obtenue à l'étape 100, et de la valeur de la température du fluide $T_{30}$ à l'entrée de l'organe de détente, obtenue à l'étape 103.

A l'étape 105 de la figure 3, la carte électronique 401 peut alors calculer le débit massique de fluide frigorigène $m_{DET}$ selon l'équation A3 de l'annexe A, à partir de:

, la pression du fluide à l'entrée de l'organe de détente $P_{20}$, estimée/mesurée à l'étape 100,
, la surface S (en $mm^2$) de la section de passage de l'organe de détente, estimée à l'étape 102, et
, du coefficient Ro de la densité du fluide frigorigène $CO_2$, estimée à l'étape 104.

En complément, l'estimation du débit massique de fluide frigorigène au niveau de l'organe de détente $m_{DET}$ peut être utilisée pour calculer la puissance Pa consommée par le compresseur.

La figure 5 est un organigramme représentant les étapes mises en oeuvre par la carte électronique pour calculer la puissance Pa consommée par le compresseur à partir de l'estimation du débit massique de fluide frigorigène au niveau de l'organe de détente $m_{DET}$. L'estimation de la puissance absorbée par le compresseur peut en particulier nécessiter une estimation préalable du travail du compresseur $\Delta$his, conformément aux équations A6 et A7 de l'annexe A.

A l'étape 200, la carte électronique calcule une estimation du travail du compresseur $\Delta$his, conformément à l'équation A8 de l'annexe A, à partir :

, de la pression du fluide frigorigène en entrée de l'organe de détente $P_{20}$,
, de la pression du fluide frigorigène en entrée du compresseur $P_{35}$, et
, de la température du fluide $T_{cpr}$ relative au compresseur.

Lorsque la température du fluide relative au compresseur est la température du fluide à l'entrée du compresseur $T_{35}$ (conformément à l'équation A81 de l'annexe A), elle peut être mesurée par une sonde 35 placée en entrée du compresseur, comme représenté sur les figures 1B et 6.

Lorsque la température du fluide relative au compresseur est la température du fluide à la sortie du compresseur $T_{36}$ (conformément à l'équation A82 de l'annexe A), elle peut être mesurée par une sonde 36 placée en sortie du compresseur, comme représenté sur la figure 7.

La pression du fluide à l'entrée du compresseur $P_{35}$ peut être estimée ou mesurée.

A l'étape 202, la carte électronique calcule la puissance isentropique Wis à partir de la valeur du débit massique de fluide frigorigène $m_{DET}$ obtenue à l'étape 105 et le travail du compresseur $\Delta$his obtenue à l'étape 200, conformément à l'équation A7 de l'annexe A.

A l'étape 204, la carte électronique calcule une estimation de la puissance absorbée par le compresseur Pa, selon l'équation A6 de l'annexe A à partir de la valeur de la puissance isentropique Wis obtenue à l'étape 202 et de la vitesse de rotation N du compresseur.

La vitesse de rotation du compresseur N est fournie à la carte électronique par le calculateur d'injection du moteur 42, par la liaison 33 en référence à la figure 1B.

Le calculateur peut utiliser la valeur estimée de la puissance réelle consommée par le compresseur pour ajuster les paramètres d'injection, ce qui permet de réduire la consommation de carburant.

L'installation de climatisation conforme à l'invention permet d'obtenir une estimation satisfaisante du débit de fluide frigorigène au niveau de l'organe de détente. En outre, cette installation n'utilise pas de capteur de basse pression pour l'estimation du débit de fluide frigorigène au niveau de l'organe de détente, ce qui permet de réduire le coût total de l'installation.

Bien évidemment, la présente invention n'est pas limitée aux modes de réalisation décrits ci-avant. Elle englobe toutes les variantes de réalisation qui pourront être envisagées par l'homme du métier.

La présente invention vise également le code logiciel qu'elle fait intervenir, tout particulièrement lorsqu'il est mis à disposition sur tout support lisible sur un ordinateur. L'expression "support lisible par ordinateur" couvre un support de stockage, par exemple magnétique ou optique, aussi bien qu'un moyen de transmission, tel qu'un signal numérique ou analogique.

## ANNEXE A

## Débit massique du fluide frigorigène supercritique

$$m_{DET} = K*S* \, Ro * \ln(P_{20} + C) \tag{A10}$$

$$Ro = f(T_{30}, P_{20}) \tag{A11}$$

## Surface S de la section de passage de l'organe de détente

Si $P_{20} \leq P1$,

$$S = S1 \tag{A2}$$

Si $P1 < P_{20} \leq P2$,

$$S = S1 + (S2 - S1)* (P_{20} - P1) / (P2 - P1) \tag{A3}$$

Si $P2 < P_{20} \leq P3$,

$$S = S2 + (S3 - S2)* (P_{20} - P2) / (P3 - P2) \tag{A4}$$

Si $P_{20} \geq P3$,

$$S = S4 \tag{A5}$$

**Puissance consommée par le compresseur**

$$Pa = a*Wis + b*N \tag{A6}$$

**Puissance isentropique Wis**

$$Wis = m_{DET} * \Delta his \tag{A7}$$

**travail du compresseur $\Delta his$**

$$\Delta his = F(P_{20}, P_{35}, T_{35}) \tag{A80}$$

$$\Delta his = [(P_{20}/P_{35})^{(k-1)/k} - 1]*(T_{35} + 273,15) * (R/M) / (k-1) \tag{A81}$$

$$\Delta his = [1- (P_{20}/P_{35})^{(1-k)/k}]*(T_{36} + 273,15) * (R/M)/(k-1) \tag{A82}$$

**Estimation de la pression du fluide frigorigène en entrée du compresseur $\underline{P_{35}}$**

$$\Delta p = P_{50} - P_{35} \tag{A90}$$

$$\Delta p = k * (Ro * VCo_2) / 2 \tag{A100}$$

$$VCo_2 = M_{DET} / (Ro*S) \tag{A101}$$

$$P_{35} = P_{50} - M_{DET} * K / (2 * Ro * S^2) \tag{A9}$$

$$T_{50} = ( T_{40} - (1-\eta_{evap}) * T_{60}) / \eta_{evap} \tag{A91}$$

$T_{50} \Rightarrow P_{50}$ loi de saturation du fluide R744

**Revendications**

1. Installation de climatisation pour véhicule à moteur, munie d'un circuit de fluide frigorigène supercritique (10) comprenant un compresseur (14), un refroidisseur de gaz (11), un organe de détente (12) définissant une section de passage de fluide, et un évaporateur (13),
l'installation comprenant en outre un dispositif électronique de contrôle destiné à interagir avec le circuit de fluide frigorigène,

**caractérisée en ce que** le dispositif électronique de contrôle comprend une fonction de calcul utilisant une estimation de la section de passage de l'organe de détente, le coefficient de densité du fluide frigorigène (Ro), et la pression du fluide frigorigène à l'entrée de l'organe de détente ($P_{20}$) pour calculer une estimation du débit massique de fluide frigorigène au niveau de l'organe de détente ($M_{DET}$).

**2.** Installation de climatisation selon la revendication 1, **caractérisée en ce que** la section de passage de l'organe de détente est estimée à partir de la valeur de la pression du fluide frigorigène à l'entrée de l'organe de détente ($P_{20}$).

**3.** Installation de climatisation selon la revendication 2, **caractérisée en ce que** le dispositif électronique de contrôle est apte à réagir au fait que la valeur de la pression du fluide frigorigène en entrée de l'organe de détente $P_{20}$ est :

, inférieure ou égale à une première valeur de pression P1, en affectant une première constante S1 à la section de passage de l'organe de détente S1;

inférieure ou égale à une deuxième valeur de pression P2 et supérieure à la première valeur de pression P1, en mettant en oeuvre la résolution de l'équation suivante pour calculer une estimation de la section de passage de l'organe de détente S:

$$S = S1 + (S2 - S1)* (P_{20} - P1) / (P2 - P1),$$

où S2 est une deuxième constante;

inférieure ou égale à une troisième valeur de pression P3 et supérieure à la deuxième valeur de pression P2, en mettant en oeuvre la résolution de l'équation suivante pour calculer une estimation de la section de passage de l'organe de détente S:

$$S = S2 + (S3 - S2)* (P_{20} - P2) / (P3 - P2)$$

où S3 est une troisième constante;

supérieure ou égale à la troisième valeur de pression P3 en affectant une quatrième constante S4 à la section de passage de l'organe de détente.

**4.** Installation de climatisation selon la revendication 3, **caractérisée en ce que** la première valeur de pression P1 est sensiblement égale à 80 bars, la deuxième valeur de pression P2 est sensiblement égale à 110 bars, la troisième valeur de pression P3 est sensiblement égale à 135 bars, et **en ce que** la première constante S1 est sensiblement égale à $0,07 mm^2$, la deuxième constante S2 est sensiblement égale à $0,5 mm^2$, la troisième constante S3 est sensiblement égale à $0,78 mm^2$, et la quatrième constante S4 est sensiblement égale à $3,14 mm^2$.

**5.** Installation de climatisation selon l'une des revendications précédentes, **caractérisée en ce que** la fonction de calcul est propre à calculer le coefficient de densité du fluide frigorigène (Ro) à partir de la température du fluide à l'entrée de l'organe de détente ($T_{30}$) et de la pression du fluide à l'entrée de l'organe de détente ($P_{20}$).

**6.** Installation de climatisation selon la revendication 5, **caractérisée en ce qu'**elle comporte une sonde (30) placée à l'entrée de l'organe de détente (12) pour mesurer la température du fluide à l'entrée de l'organe de détente ($T_{30}$).

**7.** Installation de climatisation selon l'une des revendications précédentes, **caractérisée en ce qu'**elle comporte un capteur (20) placé à l'entrée de l'organe de détente (12) pour mesurer la pression du fluide à l'entrée de l'organe de détente ($P_{20}$).

**8.** Installation de climatisation selon l'une des revendications précédentes, **caractérisée en ce que** le dispositif électronique de contrôle comporte en outre une fonction d'estimation de puissance capable d'estimer la puissance absorbée par le compresseur à partir:

- du débit de fluide frigorigène ($m_{DET}$) fourni par la fonction de calcul,
- du travail du compresseur ($\Delta his$), et

- de la vitesse de rotation du compresseur (N).

9.  Installation de climatisation selon la revendication 8, **caractérisée en ce que** le dispositif électronique de contrôle est apte à estimer le travail du compresseur ($\Delta$his) à partir de la pression du fluide à l'entrée de l'organe de détente ($P_{20}$), de la pression du fluide frigorigène en entrée du compresseur ($P_{35}$) et d'une température de fluide relative au compresseur ($T_{cpr}$).

10. Installation de climatisation selon la revendication 9, **caractérisée en ce que** la pression du fluide frigorigène en entrée du compresseur ($P_{35}$) est estimée à partir d'une pression ($P_{50}$) à l'entrée ou à la sortie de l'évaporateur (13) combinée au débit massique de fluide frigorigène ($m_{DET}$).

11. Installation de climatisation selon la revendication 10, **caractérisée en ce que** la pression ($P_{50}$) à l'entrée ou à la sortie de l'évaporateur (13) est déterminée à partir de la température ($T_{50}$) du fluide réfrigérant à l'entrée ou à la sortie de l'évaporateur (13), cette dernière étant soit mesurée par une sonde soit estimée à partir :

    - d'une température ($T_{40}$) relative à l'évaporateur (13),
    - de l'efficacité ($\eta_{evap}$) de l'évaporateur (13),
    - de la température de l'air à refroidir ($T_{60}$).

12. Installation de climatisation selon l'une des revendications 9 à 11, **caractérisée en ce que** la température de fluide relative au compresseur (10) est la température du fluide à l'entrée du compresseur ($T_{35}$).

13. Installation de climatisation selon la revendication 12, **caractérisée en ce qu'**elle comporte une sonde (35) placée à l'entrée du compresseur (14) pour mesurer la température du fluide à l'entrée du compresseur ($T_{35}$).

14. Installation de climatisation selon l'une des revendications 9 à 11,, **caractérisée en ce que** la température de fluide relative au compresseur (14) est la température du fluide à la sortie du compresseur ($T_{36}$).

15. Installation de climatisation selon la revendication 14, **caractérisée en ce qu'**elle comporte une sonde (36) placée à la sortie du compresseur (14) pour mesurer la température du fluide à la sortie du compresseur ($T_{36}$).


**Claims**

1.  Motor vehicle air-conditioning unit, provided with a supercritical refrigerant circuit (10) comprising a compressor (14), a gas cooler (11), an expansion device (12), defining a refrigerant flow area, and an evaporator (13), the assembly further including an electronic control device designed to interact with the refrigerant circuit,
    **characterized in that** the electronic control device includes a calculating function using an estimate of the flow area of the expansion device, the density (p) of the refrigerant and the pressure ($P_{20}$) of the refrigerant at the inlet of the expansion device in order to calculate an estimate of the refrigerant mass flow rate ($m_{exp}$) at the expansion device.

2.  Air-conditioning unit as claimed in Claim 1, **characterized in that** the flow area of the expansion device is estimated from the value of the refrigerant pressure ($P_{20}$) at the inlet of the expansion device.

3.  Air-conditioning unit as claimed in Claim 2, **characterized in that** the electronic control device is capable of reacting to the fact that the value of the refrigerant pressure $P_{20}$ at the inlet of the expansion device is:

    . less than or equal to a first pressure value P1, a first constant S1 being assigned to the flow area S of the expansion device;
    . less than or equal to a second pressure value P2 greater than the first pressure value P1, by solving the following equation in order to calculate an estimate of the flow area S of the expansion device:

    $$S = S1 + (S2-S1) \times (P_{20}-P1)/(P2-P1),$$

    where S2 is a second constant;

. less than or equal to a third pressure value P3 and greater than the second pressure value P2, solving the following equation in order to calculate an estimate of the flow area S of the expansion device:

$$S = S2 + (S3-S2) \times (P_{20}-P2)/(P3-P2),$$

where S3 is a third constant; and
. greater than or equal to the third pressure value P3, a fourth constant S4 being assigned to the flow area of the expansion device.

4. Air-conditioning unit as claimed in Claim 3, **characterized in that** the first pressure value P1 is approximately equal to 80 bar, the second pressure value P2 is approximately equal to 110 bar and the third pressure value P3 is approximately equal to 135 bar and **in that** the first constant S1 is approximately equal to $0.07$ mm$^2$, the second constant S2 is approximately equal to $0.5$ mm$^2$, the third constant S3 is approximately equal to $0.78$ mm$^2$ and the fourth constant S4 is approximately equal to $3.14$ rom$^2$.

5. Air-conditioning unit as claimed in one of the preceding claims, **characterized in that** the calculating function is specific to calculating the density (p) of the refrigerant from the refrigerant temperature ($T_{30}$) at the inlet of the expansion device and from the refrigerant pressure ($P_{20}$) at the inlet of the expansion device.

6. Air-conditioning unit as claimed in Claim 5, **characterized in that** it includes a probe (30) placed at the inlet of the expansion device (12) for measuring the refrigerant temperature ($T_{30}$) at the inlet of the expansion device.

7. Air-conditioning unit as claimed in one of the preceding claims, **characterized in that** it includes a sensor (20) placed at the inlet of the expansion device (12) for measuring the refrigerant pressure ($P_{20}$) at the inlet of the expansion device.

8. Air-conditioning unit as claimed in one of the preceding claims, **characterized in that** the electronic control device further includes a power estimation function capable of estimating the power absorbed by the compressor from:

   - the refrigerant mass flow rate ($m_{exp}$) provided by the calculating function;
   - the work ($\Delta$Hise) of the compressor; and
   - the rotation speed (N) of the compressor.

9. Air-conditioning unit as claimed in Claim 8, **characterized in that** the electronic control device is capable of estimating the work ($\Delta$Hise) of the compressor from the refrigerant pressure ($P_{20}$) at the inlet of the expansion device, from the refrigerant pressure ($P_{35}$) at the inlet of the compressor and from a refrigerant temperature ($T_{comp}$) relative to the compressor.

10. Air-conditioning unit as claimed in Claim 9, **characterized in that** the refrigerant pressure ($P_{35}$) at the inlet of the compressor is estimated from a pressure ($P_{50}$) at the inlet or at the outlet of the evaporator (13) combined with the refrigerant mass flow rate (mexp).

11. Air-conditioning unit as claimed in Claim 10, **characterized in that** the pressure ($P_{50}$) at the inlet or at the outlet of the evaporator (13) is determined from the refrigerant temperature ($T_{50}$) at the inlet or at the outlet of the evaporator (13), said temperature being either measured by a probe or estimated from:

   - a temperature ($T_{40}$) relative to the evaporator (13) ;
   - the efficiency ($\eta_{evap}$) of the evaporator (13); and
   - the temperature ($T_{60}$) of the air to be cooled.

12. Air-conditioning unit as claimed in one of Claims 9 to 11, **characterized in that** the refrigerant temperature relative to the compressor (10) is the refrigerant temperature ($T_{35}$) at the inlet of the compressor.

13. Air-conditioning unit as claimed in Claim 12, **characterized in that** it includes a probe (35) placed at the inlet of the compressor (14) for measuring the refrigerant temperature ($T_{35}$) at the inlet of the compressor.

**14.** Air-conditioning unit as claimed in one of Claims 9 to 11, **characterized in that** the refrigerant temperature relative to the compressor (14) is the refrigerant temperature ($T_{36}$) at the outlet of the compressor.

**15.** Air-conditioning unit as claimed in Claim 14, **characterized in that** it includes a probe (36) placed at the outlet of the compressor (14) for measuring the refrigerant temperature ($T_{36}$) at the outlet of the compressor.

**Patentansprüche**

**1.** Klimaanlage für ein Motorfahrzeug, die mit einem Kreislauf (10) eines überkritischen Kältemittels ausgestattet ist, der einen Kompressor (14), einen Gaskühler (11), ein Expansionsorgan (12), das einen Kältemittel-Durchgangsquerschnitt definiert, und einen Verdampfer (13) aufweist,
wobei die Anlage außerdem eine elektronische Regeleinrichtung aufweist, die dazu bestimmt ist, mit dem Kältemittelkreislauf zu interagieren,
**dadurch gekennzeichnet, dass** die elektronische Regeleinrichtung eine Rechenfunktion aufweist, die eine Schätzung des Durchgangsquerschnitts des Expansionsorgans, den Dichtekoeffizienten (Ro) des Kältemittels, und den Druck ($P_{20}$) des Kältemittels am Eingang des Expansionsorgans verwendet, um eine Schätzung des Massenstroms ($m_{DET}$) an Kältemittel in Höhe des Expansionsorgans zu berechnen.

**2.** Klimaanlage nach Anspruch 1, **dadurch gekennzeichnet, dass** der Durchgangsquerschnitt des Expansionsorgans ausgehend vom Wert des Drucks ($P_{20}$) des Kältemittels am Eingang des Expansionsorgans geschätzt wird.

**3.** Klimaanlage nach Anspruch 2, **dadurch gekennzeichnet, dass** die elektronische Regeleinrichtung in der Lage ist, auf die Tatsache zu reagieren, dass der Wert des Drucks $P_{20}$ des Kältemittels am Eingang des Expansionsorgans ist:

. geringer als oder gleich einem ersten Druckwert P1, indem eine erste Konstante S1 dem Durchgangsquerschnitt S des Expansionsorgans zugewiesen wird;
. geringer als oder gleich einem zweiten Druckwert P2 und höher als der erste Druckwert P1, indem die Lösung der folgenden Gleichung verwendet wird, um eine Schätzung des Durchgangsquerschnitts S des Expansinnsorgans zu berechnen:

$$S \approx S1 + (S2-S1)*(P_{20}-P1)/(P2-P1),$$

wobei S2 eine zweite Konstante ist;
. geringer als oder gleich einem dritten Druckwert P3 und höher als der zweite Druckwert P2, indem die Lösung der folgenden Gleichung verwendet wird, um eine Schätzung des Durchgangsquerschnitts S des Expansionsorgans zu berechnen:

$$S = S2 + (S3-S2)*(P_{20}-P2)/(P3-P2),$$

wobei S3 eine dritte Konstante ist;
. höher oder gleich dem dritten Druckwert P3, indem dem Durchgangsquerschnitt des Expansionsorgans eine vierte Konstante s4 zugewiesen wird.

**4.** Klimaanlage nach Anspruch 3, **dadurch gekennzeichnet, dass** der erste Druckwert P1 im Wesentlichen gleich 80 Bar, der zweite Druckwert P2 im wesentlichen gleich 110 Bar, der dritte Druckwert P3 im Wesentlichen gleich 135 Bar ist, und dass die erste Konstante S1 im Wesentlichen gleich 0,07 mm$^2$, die zweite Konstante S2 im Wesentlichen gleich 0,5 mm$^2$, die dritte Konstante S3 im Wesentlichen gleich 0,78 mm$^2$, und die vierte Konstante S4 im Wesentlichen gleich 3,14 mm$^2$ ist.

**5.** Klimaanlage nach einem der vorhergehenden Ansprüche, **dadurch gekennzeichnet, dass** die Rechenfunktion in der Lage ist, den Dichtekoeffizient (Ro) des Kältemittels ausgehend von der Temperatur ($T_{30}$) des Kältemittels am Eingang des Expansionsorgans und vom Druck ($P_{20}$) des Kältemittels am Eingang des Expansionsorgans zu berechnen.

**6.** Klimaanlage nach Anspruch 5, **dadurch gekennzeichnet, dass** sie eine Sonde (30) aufweist, die am Eingang des Expansionsorgans (12) angeordnet ist, um die Temperatur ($T_{30}$) des Kältemittels am Eingang des Expansionsorgans zu messen.

**7.** Klimaanlage nach einem der vorhergehenden Ansprüche, **dadurch gekennzeichnet, dass** sie einen Messfühler (20) aufweist, der am Eingang des Expansionsorgans (12) angeordnet ist, um den Druck ($P_{20}$) des Kältemittels am Eingang des Expansionsorgans zu messen.

**8.** Klimaanlage nach einem der vorhergehenden Ansprüche, **dadurch gekennzeichnet, dass** die elektronische Regeleinrichtung außerdem eine Leistungsschätzfunktion aufweist, die in der Lage ist, die vom Kompressor absorbierte Leistung zu schätzen ausgehend von

- dem Kältemittelstrom ($m_{DET}$), der von der Rechenfunktion geliefert wird,
- der Arbeit ($\Delta his$)des Kompressors, und
- der Drehgeschwindigkeit (N) des Kompressors.

**9.** Klimaanlage nach Anspruch 8, **dadurch gekennzeichnet, dass** die elektronische Regeleinrichtung in der Lage ist, die Arbeit ($\Delta his$) des Kompressors ausgehend vom Druck ($P_{20}$) des Kältemittels am. Eingang des Expansionsorgans, vom Druck ($P_{35}$) des Kältemittels am Eingang des Kompressors und von einer relativen Kältemitteltemperatur ($T_{cpr}$) am Kompressor zu schätzen.

**10.** Klimaanlage nach Anspruch 9, **dadurch gekennzeichnet, dass** der Druck ($P_{35}$) des Kältemittels am Eingang des Kompressors ausgehend von einem Druck ($P_{50}$) am Eingang oder am Ausgang des Verdampfers (13) kombiniert mit dem Kältemittel-Massenstrom ($m_{DET}$) geschätzt wird.

**11.** Klimaanlage nach Anspruch 10, **dadurch gekennzeichnet, dass** der Druck ($P_{50}$) am Eingang oder am Ausgang des Verdampfers (13) ausgehend von der Temperatur ($T_{50}$) des Kältemittels am Eingang oder am Ausgang des Verdampfers (13) bestimmt wird, wobei letztere entweder von einer Sonde gemessen oder geschätzt wird ausgehend von:

- einer relativen Temperatur ($T_{40}$) am Verdampfer (13).
- der Wirksamkeit ($\eta_{evap}$) des verdampfers (13),
- der Temperatur ($T_{60}$) der zu kühlenden Luft.

**12.** Klimaanlage nach einem der Ansprüche 9 bis 11, **dadurch gekennzeichnet, dass** die relative Kältemitteltemperatur am Kompressor (10) die Temperatur ($T_{35}$) des Kältemittels am Eingang des Kompressors ist.

**13.** Klimaanlage nach Anspruch 12, **dadurch gekennzeichnet, dass** sie eine Sonde (35) aufweist, die am Eingang des Kompressors (14) angeordnet ist, um die Temperatur ($T_{35}$) des Kältemittels am Eingang des Kompressors zu messen.

**14.** Klimaanlage nach einem der Ansprüche 9 bis 11, **dadurch gekennzeichnet, dass** die relative Kältemitteltemperatur am Kompressor (14) die Temperatur ($T_{36}$) des Kältemittels am Ausgang des Kompressors ist.

**15.** Klimaanlage nach Anspruch 14, **dadurch gekennzeichnet, dass** sie eine Sonde (36) aufweist, die am Ausgang des Kompressors (14) angeordnet ist, um die Temperatur ($T_{36}$) am Ausgang des Kompressors zu messen.

## Fig.1A

## Fig.2

REGULATEUR
D'HABITACLE — 41

40

402
REGULATEUR
DE
CLIMATISATION

35

34

401
CARTE
ELECTRONIQUE

32

42
CALCULATEUR
D'INJECTION
DU
MOTEUR

33

MOTEUR

43

31

30

GASCOOLER

14

10

11

23

30
IHX

35

20

12

13
EVAPORATEUR

17

Fig.1B

Mesurer / Estimer
la pression du fluide $P_{2D}$ — 100

Estimer la surface $S$
de la section de passage
de l'organe de détente — 102

Estimer / Mesurer la
Température $T_{2D}$ — 103

Calculer
le coefficient R0 — 104

Calculer le débit
massique du fluide
frigorigène au niveau
de l'organe de détente
$m_{DET}$ — 105

Fig.3

$P_{20}$

1020
$P_{20} \leq P_1$ ?

1021
$P_1 < P_{20} \leq P_2$ ?

1022
$P_2 < P_{20} \leq P_3$ ?

1023
$P_{20} > P_3$ ?

$S = S1$

$S = S_1 + \dfrac{S_2 - S_1}{P_2 - P_1}(P_{20} - P_1)$

$S = S_2 + \dfrac{S_3 - S_2}{P_3 - P_2}(P_{20} - P_2)$

$S = S_4$

Fig.4

EP 1 687 161 B1

Fig.5

Calculer le travail du compresseur

$\Delta his = f (P_{20}, P_{23}, T_{gur})$

— 200

Calculer le travail
isentropique
$Wis = \Delta his . m_{DET}$

— 202

Calculer la puissance Pa
consommée par
le compresseur
$Pa = a Wis + bN$

— 204

Fig.6

11

GASCOOLER

14

30

23

IHX

35

20

12

EVAPORATEUR

13

17

Fig.7

Fig. 8

51

13

Fig. 9

52

13

13

Fig. 10

51

13

Fig. 11

52

13

$T_{40}$

Fig. 12

EP 1 687 161 B1

Fig. 13

Fig. 14